# EUROPÄISCHE PATENTSCHRIFT

(11) **EP 3 980 744 B1**
(45) Veröffentlichungstag und Bekanntmachung des Hinweises auf die Patenterteilung: **07.08.2024**
(21) Anmeldenummer: 20730249.8
(22) Anmeldetag: 02.06.2020
(51) Int. Cl.: G01M 17/007, G01S 7/40, G01S 13/931, G09B 23/10

(54) **DUMMY-FAHRZEUG MIT EINER SENSORSENSITIVEN SCHICHT**
DUMMY VEHICLE COMPRISING A SENSOR-SENSITIVE LAYER
VÉHICULE FICTIF DOTÉ D'UNE COUCHE SENSIBLE À DES CAPTEURS

(30) Priorität: 04.06.2019 DE 102019115016
(43) Veröffentlichungstag der Anmeldung: 13.04.2022
(73) Patentinhaber: 4Activesystems GmbH, 8772 Traboch (AT)
(72) Erfinder: HAFELLNER, Reinhard, 8724 Spielberg (AT); FRITZ, Martin, 8723 Kobenz (AT); WIMMER, Thomas, 9313 St. Georg am Längsee (AT)
(74) Vertreter: Dilg, Haeusler, Schindelmann Patentanwaltsgesellschaft mbH
(86) Internationale Anmeldenummer: PCT/EP2020/065209
(87) Internationale Veröffentlichungsnummer: WO 2020/245112

(56) Entgegenhaltungen:
- EP-A1- 3 306 430
- DE-A1- 102014 117 014
- DE-A1- 102016 112 518
- US-A1- 2016 356 674
- US-A1- 2018 010 984

## Beschreibung

### Technisches Gebiet

Die vorliegende Erfindung betrifft ein Dummy-Fahrzeug zum Durchführen von Tests für Fahrerassistenzsysteme.

### Hintergrund der Erfindung

Zum Testen von Fahrerassistenzsystemen für Fahrzeuge werden häufig Fahrzeug-Dummys eingesetzt, wie z.B. Motorrad-Dummys oder Auto-Dummys. Solche Fahrzeug-Dummys gleichen in zumindest einem Aspekt oder einer Eigenschaft den Fahrzeugen, welche die Fahrzeug-Dummys simulieren sollen. Beispielsweise können Fahrzeug-Dummys eine ähnliche geometrische Form oder eine ähnliche Größe haben wie die zu simulierenden Objekte. Kollisionen oder kollisionsnahe Situationen können in vielen Tests von Fahrerassistenzsystemen nicht vermieden werden und sind häufig sogar erwünscht, um Extremsituationen zu untersuchen oder auch um Fahrerassistenzsysteme zu trainieren. Die Fahrzeug-Dummys sollen nach Kollisionen möglichst zerstörungsfrei bleiben, damit diese für mehrere Testläufe einsetzbar sind. Zudem sollen die Fahrzeug-Dummys der Herstellung kostengünstig Seil und dennoch die zu simulierenden Fahrzeuge realitätsnah nachbilden.

Die Dokumente DE102014117014, DE2016112518, EP3306430 und US2016/356674 offenbaren Dummy-Fahrzeuge zum Durchführen von Tests für Fahrerassistenzsysteme anhand den Oberbegriff von Anspruch 1.

### Darstellung der Erfindung

Es ist eine Aufgabe der vorliegenden Erfindung, einen Fahrzeug-Dummy bereitzustellen, welcher kurz eines einfachen Aufbaus ein zu simulierendes Fahrzeug realitätsnah nachbildet.

Diese Aufgabe wird mit einem Fahrzeug-Dummy zum Durchführen von Tests für Fahrerassistenzsysteme gemäß dem unabhängigen Anspruch gelöst.

Gemäß einem ersten Aspekt der vorliegenden Erfindung wird ein Dummy-Fahrzeug zum Durchführen von Tests für Fahrerassistenzsysteme bereitgestellt. Das Dummy-Fahrzeug weist ein Fahrzeugelement auf, welches einen Teil eines zu simulierendes Fahrzeugs abbildet. Das Fahrzeugelement bildet eine Hüllstruktur aus, wobei die Hüllstruktur eine Außenschicht und eine Innenschicht aufweist. Die Außenschicht ist in der Hüllstruktur weiter außen (in Richtung Umgebung des Fahrzeugelements) angeordnet als die Innenschicht. Die Außenschicht ist transparent für Sensorsignale von Sensoren des Fahrerassistenzsystems und die Innenschicht ist sensorsensitiv für Sensorsignale von Sensoren des Fahrerassistenzsystems ausgebildet.

Entsprechend betrifft die Erfindung gemäß einem weiteren Aspekt ein Verfahren zum Durchführen von Tests für Fahrerassistenzsysteme mit dem oben beschriebenen Dummy-Fahrzeug.

Ein Fahrerassistenzsystem beschreibt ein System, das den Fahrer eines Fahrzeugs, zum Beispiel eines Kraftfahrzeugs, bei der Fahrzeugführung unterstützt. Fahrerassistenzsysteme können auch in autonomen Fahrzeugen zum Einsatz kommen, in denen die Fahrzeugführung vollständig oder fast vollständig durch ein autonomes System übernommen wird, beispielsweise ein durch künstliche Intelligenz unterstütztes System, insbesondere eine entsprechende Computer-Software. Fahrerassistenzsysteme sind beispielsweise Notbremsassistenten, Spurwechselassistenten, Parkassistenten, Abstandsregler, Verkehrszeichenassistenten oder Nachtsichtassistenten.

Fahrerassistenzsysteme können Sensoren, insbesondere Radarsensoren oder Temperatursensoren, aufweisen, mit denen sie Sensorsignale aus der Umgebung empfangen. Mithilfe einer Auswertung solcher empfangener Sensorsignale können sie Aspekte der Umgebung erkennen, insbesondere Eigenschaften von verschiedenen Objekten, wie beispielsweise andere Fahrzeuge, in der Umgebung. Derartige Eigenschaften können zum Beispiel Entfernungen, geometrische Ausmaße, Temperaturen oder Geschwindigkeiten von anderen Fahrzeugen sein. Geschwindigkeiten können relativ zur Umgebung bestimmt sein, beispielsweise relativ zu einer Straße, oder auch relativ zu einem Fahrzeug mit dem Fahrerassistenzsystem. Objekte können eine Gesamtgeschwindigkeit oder Schwerpunktgeschwindigkeit haben, Teile des Objekts können aber auch in beliebiger Weise relativ zueinander und relativ zur Schwerpunktbewegung bewegbar sein. Fahrerassistenzsysteme können auch Sender von Signalen aufweisen, die von der Umgebung in charakteristischer Weise verändert werden, um dann von den Sensoren zumindest teilweise empfangen zu werden, beispielsweise Sender von Radarwellen. Insbesondere können Sensorsignale ausgesendet werden, die die Außenschicht durchdringen und dann ausschließlich von der Innenschicht reflektiert werden. Sensorsignale können dabei elektromagnetische Strahlung, wie z.B. Radarwellen, Radiowellen oder Mikrowellen, Wärmestrahlung, Licht, Röntgenstrahlung oder Infrarotstrahlung.

Bei einem Test eines Fahrerassistenzsystems kann ein Fahrzeug mit dem Fahrerassistenzsystem ausgestattet sein. Das derart ausgestattete Fahrzeug kann auf einer Teststrecke mit vorbestimmten Situationen konfrontiert werden, wobei die Reaktion des Fahrerassistenzsystems auf eine vorbestimmte Situation beobachtet und nach vorgegebenen Kriterien beurteilt wird. Fahrerassistenzsysteme können auch getestet werden, ohne dass sie in ein Fahrzeug eingebaut sind.

Ein zu simulierendes Fahrzeug steilt ein bewegbares Fahrzeug dar. Als Fahrzeug beispielsweise ein Zweirad, insbesondere ein Fahrrad oder ein Motorrad, ein Personenkraftwagen (Pkw), ein Lastkraftwagen (Lkw) oder ein sonstiges bewegliches Fahrzeug verstanden, welches von Fahrerassistenzsystemen detektiert werden soll.

Das erfindungsgemäße Dummy-Fahrzeug bildet das zu simulierende Fahrzeug ab. Insbesondere ist das Dummy-Fahrzeug für die Sensoren, wie beispielsweise Temperatursensoren oder Radarsensoren, des Fahrerassistenzsystems wahrnehmbar oder erkennbar. Das Dummy-Fahrzeug kann sich in der Umgebung des Fahrzeugs, in dem das Fahrerassistenzsystem eingebaut ist, bewegen.

Das erfindungsgemäße Dummy-Fahrzeug weist zumindest ein Fahrzeugelement oder eine Vielzahl von verschiedenen Fahrzeugelementen auf. Ein Fahrzeugelement bildet einen Teil des zu simulierenden Fahrzeugs ab. Ein Fahrzeugelement kann beispielsweise ein Teil einer Tür, eines Rahmenteils oder eines Karosserieteils ausbilden. Das Fahrzeugelement bildet insbesondere ein Teil des zu simulierenden Fahrzeugs ab, welches beispielsweise metallische Strukturen aufweist bzw. Radarwellen reflektiert. Beispielsweise bildet das Fahrzeugelement ein Karosserieteil aus, wie beispielsweise eine Tür, eine Motorhaube oder auch innenliegende Strukturen, wie z.B. einen Motorblock.

Das Fahrzeugelement weist insbesondere eine Hüllstruktur auf, welche eine Außenstruktur bzw. Außenschicht und eine Innenstruktur bzw. Innenschicht auf. Die Außenschicht ist zur Umgebung des Fahrzeugelements außenliegend im Vergleich zu der Innenschicht. Neben der Innenschicht und der Außenschicht kann die Hüllstruktur ferner eine Vielzahl von weiteren Schichten aufweisen. Beispielsweise können mehrere Schichten zwischen der Außenschicht und der Innenschicht liegen. Die Innenschicht liegt somit beabstandet von der Außenschicht vor. Die Innenschicht kann auch direkt innenliegend an der Außenschicht befestigt sein. Auf der Außenschicht können ferner außenseitig weitere Schichten angebracht sein und entsprechend an der Innenschicht können innenseitig weitere Schichten angebracht sein. In einer beispielhaften Ausführungsform kann die Außenschicht diejenige Schicht der Hüllstruktur sein, die mit der Umgebung des Fahrzeugelements in Kontakt steht. Die Innenschicht kann diejenige Schicht der Hüllstruktur sein, die mit einem inneren Hohlraum in Kontakt steht.

Die Außenschicht wird insbesondere aus einem leichten Schaumstoffmaterial, welches beispielsweise elastisch und formstabil ist, ausgebildet. Das Schaumstoffmaterial ist insbesondere derart ausgebildet, dass das Fahrzeugelement selbsttragend ist. Die Außenschicht ist dabei transparent für Sensorsignale von Sensoren. Mit anderen Worten ist die Außenschicht nahezu vollständig durchlässig für die Sensorsignale, bzw. beeinflusst diese beim Durchdringen der Außenschicht nicht. Insbesondere ist die Außenschicht derart ausgebildet, dass keine Beeinflussung der Sensorsignale entsteht, die von Sensoren wahrnehmbar ist.

Die Außenschicht ist robuster, d.h. steifer und härter, als die Innenschicht ausgebildet. Die Außenschicht dient somit einerseits zur Formstabilität des Fahrzeugelements und andererseits zum Schutz der Innenschicht, insbesondere im Falle einer Kollision des Dummy-Fahrzeugs.

Um das Fahrzeugelement für Sensoren sichtbar zu gestalten, wird innenliegend bezüglich der Außenschicht die Innenschicht mit einem sensorsensitiven Material vorgesehen. Die Innenschicht trägt insbesondere nicht zur Formstabilität des Fahrzeugelements bei sondern kann beispielsweise flexibel ausgebildet sein. Die Innenschicht kann beispielsweise Strahlung als Sensorsignale, beispielsweise Temperaturstrahlung, abgeben. So kann beispielsweise in dem Fahrzeugelement ein Signalgenerator, z.B. eine Wärmequelle, für Sensorsignale angeordnet werden, wobei die Innenschicht diese Wärmestrahlung nach außen abgibt. So kann beispielsweise ein Motorblock eines Fahrzeugs simuliert werden. Alternativ kann bei einem Karosserieteil als Fahrzeugelement die Innenschicht reflektierend für Signalwellen ausgebildet sein. So kann die Innenschicht beispielsweise radarwellenreflektierend bzw. reflektierend für weitere elektromagnetische Wellen ausgebildet werden. Sensorsensitiv bedeutet demnach, dass die Innenschicht eine Strahlungsemittierende Schicht, strahlungsabsorbierende Schicht und/oder Strahlungsreflektierende Schicht ausbildet.

Mit der Kombination aus der sensortransparenten Außenschicht und der innenliegenden sensorsensitiven Innenschicht kann somit ein leichtes und formstabiles Fahrzeugelement eines Dummy Fahrzeugs bereitgestellt werden, welches robust ausgebildet ist, so dass bei einer Kollision die sensiblen sensorsensitiven Schichten nicht zerstört werden. Somit kann das Fahrzeug-Dummy mehrmals für Kollisionsversuche eingesetzt werden.

Bei herkömmlichen Fahrzeug-Dummys werden beispielsweise radarreflektierende Elemente an bestimmten Positionen an der Außenhaut des Dummy Fahrzeugs befestigt. Dies kann dazu führen, dass bei einer Kollision mit einem anderen Fahrzeug eine Beschädigung der radarreflektierenden Elemente vorkommen kann. Aufgrund der erfindungsgemäßen Hüllstruktur ist die innenliegende sensorsensitive, bzw. radarreflektierende, Innenschicht vor Kollisionen an der Außenschicht geschützt. Vor allem wird der Koalitionspartner, also das zu testende Fahrzeug bzw. dessen Insassen geschützt. Dadurch kann die empfindliche oder teurere sensorsensitive Innenschicht beispielsweise dünner bzw. weniger Kollisionsstabil ausgeführt werden, sodass günstigere sensorsensitive Materialien eingesetzt werden können.

Gemäß einer weiteren beispielhaften Ausführungsform bildet die Hüllstruktur einen Hohlkörper mit einem Innenvolumen aus.

Gemäß einer weiteren beispielhaften Ausführungsform weist die Hüllstruktur ein Füllmaterial auf, um welches die Innenschicht angelegt ist bzw. verläuft. Das Innenvolumen kann beispielsweise mit einem Schaumstoffmaterial oder einem anderen leichten Material ausgebildet werden und somit die Stabilität erhöhen. Die Innenschicht, welche sensorsensitiv ist, kann dabei direkt an dem Füllmaterial anlegen oder es können weitere Schichten zwischen der Innenschicht und dem Füllmaterial angeordnet werden.

Gemäß einer weiteren beispielhaften Ausführungsform weist die Innenschicht ein thermisch reflektierendes Material auf.

Gemäß einer weiteren beispielhaften Ausführungsform ist die Innenschicht beheizbar. Beispielsweise können in der Innenschicht Drähte verlaufen, sodass eine Widerstandsheizung umgesetzt wird. Ferner kann die Innenschicht mittels eines Temperiermediums erwärmt werden.

Gemäß einer weiteren beispielhaften Ausführungsform weist die Innenschicht ein radarreflektierendes Material auf. Die Innenschicht kann beispielsweise als metallische Folie ausgebildet werden. Ferner kann die Innenschicht eine metallische Netzstruktur aufweisen.

Gemäß einer weiteren beispielhaften Ausführungsform ist die Außenschicht radartransparent.

Gemäß einer weiteren beispielhaften Ausführungsform besteht die Außenschicht aus einem Schaumstoffmaterial. Beispielsweise kann die Außenschicht aus Hartschaum bzw. einem elastischen Schaummaterial bestehen, sodass eine Formstabilität bei geringem Gewicht erreicht wird. Gemäß einer beispielhaften Ausführungsform der vorliegenden Erfindung ist die Außenschicht elektrisch nicht leitend ist. Mit anderen Worten kann das Material elektrisch isolierenden und entsprechend nicht leitend sein, sodass die Radarwellenreflexion ausschließlich durch die radarreflektierende Innenschicht ermöglicht wird.

Erfindungsgemäß sind die Dicke der Außenschicht und die Dicke der Innenschicht derart ausgebildet, dass der Flächeninhalt der Innenoberfläche zumindest 70% der Außenoberfläche, insbesondere 80% bis 90% der Außenoberfläche, aufweist. Im Vergleich zu realen Teilen eines zu simulieren Fahrzeugs weist das Fahrzeugelement eine geringere radarreflektierende Außenoberfläche auf, da die reflektierende Innenschicht innen liegt und die radarwellendurchlässige Außenschicht keine Parabeln reflektiert. Wird nun ein Teil des zu simulieren Fahrzeugs mit einem Fahrzeugelement gemäß der vorliegenden Erfindung im Größenverhältnis 1:1 nachgebildet, so ist der Flächeninhalt der nicht radarreflektierenden Außenschicht des Teiles des zu simulieren Fahrzeugs größer als der Flächeninhalt der radarreflektierenden Innenschicht des Fahrzeugelements.

Es hat sich herausgestellt, dass aufgrund der geringen Auflösung der Radarsensoren in Fahrzeugassistenzsystemen der Flächeninhalt der Innenoberfläche der Innenschicht 70 % des Flächeninhalts der Außenoberfläche der Außenschicht betragen kann, wobei die Radarsensoren dennoch eine korrekte Identifikation des Fahrzeugelements als entsprechendes Teil des isolierenden Fahrzeugs bereitstellen. Somit ist es nicht notwendig, die Außenabmessungen des Fahrzeugelements im Vergleich zu dem Teil des zu simulierenden Fahrzeugs zu erhöhen, um dadurch einen identischen Flächeninhalt mit der Außenfläche des Teils zu erwirken. In der oben beschriebenen Ausführungsformen werden mit anderen Worten die Außenabmessungen des Fahrzeugelements beibehalten ohne eine Fehlmessung der Fahrerassistenzsysteme aufgrund des geringeren Flächeninhalts der radarreflektierenden Innenschicht zu erwirken.

Gemäß einer weiteren beispielhaften Ausführungsform beträgt die Dicke der Außenschicht ungefähr 0,1 cm (Zentimeter) bzw. 0,5 cm bis 30 cm, insbesondere 2 bis 15 cm, insbesondere 5 cm bis 10 cm. Mit anderen Worten beträgt die Dicke der Außenschicht z.B. weniger als 20 cm, insbesondere weniger als 10 cm oder 5 cm.

Gemäß einer weiteren beispielhaften Ausführungsform ist die Innenschicht als Folie ausgebildet. Die Folie kann beispielsweise eine Dicke von weniger als 0,4 cm, insbesondere weniger als 0,1 cm, aufweisen.

Gemäß einer weiteren beispielhaften Ausführungsform ist die Innenschicht elektrisch leitfähig.

Gemäß einer weiteren beispielhaften Ausführungsform ist die Innenschicht eine metallische Schicht. Beispielsweise kann die Innenschicht als metallische Folie ausgebildet sein. Ferner kann die metallische Schicht aus einem Netz aus Metalldrähten bestehen. Die Metallgeräte können beispielsweise in einer Trägermatrix, welche beispielsweise aus einem nicht leitenden Material besteht, eingebettet sein. Alternativ kann in einer entsprechenden beispielhaften Ausführungsform elektrisch leitende besondere metallische Partikel in der Trägermatrix eingebettet.

Gemäß einer weiteren beispielhaften Ausführungsform ist die Außenschicht aus Kunststoff, insbesondere aus Polyvinylchlorid, Polyolefinenwerkstoffen (Polyethylen, Polypropylen) oder Polyurethan, ausgebildet.

Insbesondere kann die Außenschicht aus einem geschäumten Material hergestellt werden. Das Raumgewicht bzw. die Rohdichte der Außenschicht kann beispielsweise 15 bis 150 kg/m³ betragen.

Gemäß einer weiteren beispielhaften Ausführungsform ist auf der Außenschicht eine optische Schicht, insbesondere eine Folie, aufgebracht ist. Die optische Schicht kann beispielsweise als Folie oder als Lack aufgetragen werden. Die optische Schicht simuliert beispielsweise optisch Elemente auf der Außenfläche Fahrzeugelements, wie beispielsweise Räder, Fenster oder Scheinwerfer. Die optische Schicht besteht z.B. aus Polyvinylchlorid oder Polyurethan.

Gemäß einer weiteren beispielhaften Ausführungsform weist das Dummy-Fahrzeug ein Kopplungselement zur Koppelung an einer am Boden verfahrbaren Plattform auf. Die verfahrbare Plattform kann beispielsweise individuell entlang eines Fahrwegs auf dem Boden gesteuert werden. Das Dummy-Fahrzeug kann lösbar an dieser verfahrbaren Plattform mittels des Kopplungselements, welches beispielsweise ein mechanisches oder magnetisches Kopplungselement darstellen kann, gekoppelt werden.

Gemäß einer weiteren beispielhaften Ausführungsform weist das Dummy-Fahrzeug ein weiteres Fahrzeugelement auf, welches frei von einer radarreflektierenden Schicht ist. Das weitere Fahrzeugelement kann sich beispielsweise an das Fahrzeugelement mit der radarreflektierenden Schicht anschließen, sodass das Fahrzeugelement und das weitere Fahrzeugelement gemeinsam den Hohlkörper ausbilden. Alternativ können das Fahrzeugelement und das weitere Fahrzeugelement getrennte Hohlkörper ausbilden.

Das weitere Fahrzeugelement bildet beispielsweise einen Teil des zu simulieren Fahrzeugs ab, welcher ebenfalls keine oder kaum radarreflektierende Eigenschaften aufweist. Beispielsweise kann das weitere Fahrzeugelement einen Fensterbereich oder einen Reifenbereich eines Dummy-Fahrzeugs bildet.

Gemäß einer weiteren beispielhaften Ausführungsform sind das Fahrzeugelement und das weitere Fahrzeugelement integral ausgebildet. So kann beispielsweise das Fahrzeugelement und das weitere Fahrzeugelement gemeinsam aus einem Schaumstoffmaterial hergestellt werden, wobei im Bereich des weiteren Fahrzeugelements keine radarreflektierende Innenschicht vorgesehen ist.

Das erfindungsgemäße Dummy Fahrzeug kann zur Nachbildung des zu simulierenden Fahrzeugs eine Vielzahl von Fahrzeugelement mit einer radarreflektierende Innenschicht und eine Vielzahl von weiteren Fahrzeugelementen ohne radarreflektierende Schicht aufweisen.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung eines Dummy-Fahrzeugs zur Simulation eines Motorrades gemäß einer beispielhaften Ausführungsform der vorliegenden Erfindung, und
Fig. 2 eine schematische Darstellung eines Dummy-Fahrzeugs zur Simulation eines Automobils gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

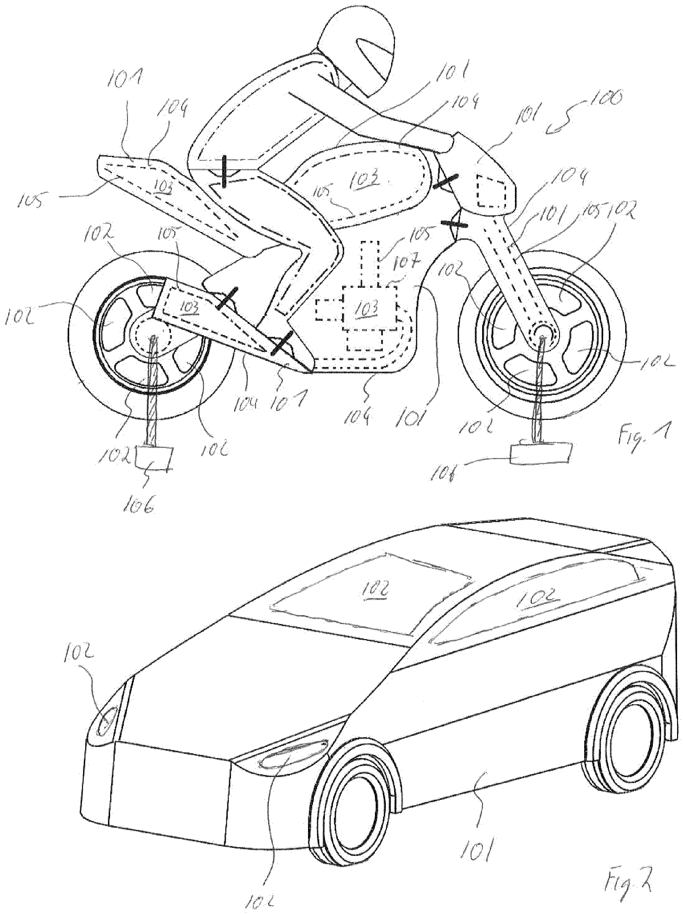

**Fig. 1** zeigt ein Dummy-Fahrzeug 100 in Form eines Motorrads zum Durchführen von Tests für Fahrerassistenzsysteme gemäß einer beispielhaften Ausführungsform der vorliegenden Erfindung. Das Dummy-Fahrzeug 100 weist ein Fahrzeugelement 101 auf, welches einen Teil eines zu simulierendes Fahrzeugs abbildet. Das Fahrzeugelement 101 bildet eine Hüllstruktur 103 aus, wobei die Hüllstruktur eine Außenschicht und eine Innenschicht aufweist. Die Außenschicht ist in der Hüllstruktur 103 weiter außen angeordnet als die Innenschicht 105. Die Außenschicht ist 104 transparent für Sensorsignale von Sensoren des Fahrerassistenzsystems, wobei die Innenschicht 105 sensorsensitiv für Sensorsignale von Sensoren des Fahrerassistenzsystems ist.

In der beispielhaften Ausführungsform aus Figur 1 bildet die Hüllstruktur einen Hohlkörper 103 aus, wobei die Hüllstruktur eine Außenschicht 104 und eine Innenschicht 105 aufweist.

Das erfindungsgemäße Dummy-Fahrzeug 100 bildet das zu simulierende Motorrad ab. Insbesondere ist das Dummy-Fahrzeug 100 für die Radarsensoren des Fahrerassistenzsystems eines anderen Fahrzeugs wahrnehmbar oder erkennbar. Das Dummy-Fahrzeug 100 kann sich in der Umgebung des Fahrzeugs, in dem das Fahrerassistenzsystem eingebaut ist, bewegen.

Das erfindungsgemäße Dummy-Fahrzeug 100 weist mehrere verschiedene Fahrzeugelemente 101 auf. Jedes Fahrzeugelement 101 bildet einen Teil des zu simulierenden Fahrzeugs ab. Ein Fahrzeugelement 101 kann beispielsweise eine Längsachse, ein Tank, einen Motorblock ein Sitz oder ein Grundrahmen des zu simulierenden Motorrads abbilden. Die Fahrzeugelemente 101 bilden insbesondere Teile des zu simulierenden Motorrads ab, welche beispielsweise metallische Strukturen aufweisen und z.B. Radarwellen reflektieren.

Die Innenschicht 105 ist diejenige Schicht der Hüllstruktur, die dem Hohlraum 103 Kontakt steht. Die Innenschicht 105 ist in Fig. 1 gestrichelt dargestellt.

Die Außenschicht 104 wird insbesondere aus einem leichten Schaumstoffmaterial, welches beispielsweise elastisch und formstabil ist, ausgebildet. Das Schaumstoffmaterial ist insbesondere derart ausgebildet, dass das Fahrzeugelement 101 selbsttragend ist.

Innenliegend an der Außenschicht 104 wird die Innenschicht 105 mit einem sensorsensitiven, z.B. radarreflektierenden, Material vorgesehen. Die Innenschicht 105 trägt insbesondere nicht zur Formstabilität des Fahrzeugelements 101 bei, sondern kann beispielsweise flexibel ausgebildet sein.

Die Außenschicht 104 ist elektrisch nicht leitend. Mit anderen Worten kann das Material elektrisch isolierenden und entsprechend nicht leitend sein, sodass die Radarwellenreflexion ausschließlich durch die radarreflektierende Innenschicht 105 ermöglicht wird.

Wie in Fig. 1 dargestellt ist die Dicke der Außenschicht 104 und die Dicke der Innenschicht 105 derart ausgebildet, dass der Flächeninhalt der Innenoberfläche zumindest 70% der Außenoberfläche, insbesondere 80% bis 90% der Außenoberfläche, aufweist.

Die Innenschicht 105 ist elektrisch leitfähig. Die Innenschicht 100 und ist insbesondere eine metallische Schicht. Beispielsweise kann die Innenschicht 105 als metallische Folie ausgebildet sein. Die Außenschicht 104 ist aus z.B. Hartschaum, z.B. aus Polyvinylchlorid, Polyphenil oder Polyurethan, ausgebildet.

Das Dummy-Fahrzeug 100 weist ferner ein Kopplungselement 106 zur Koppelung an einer am Boden verfahrbaren Plattform auf. Die verfahrbare Plattform (nicht dargestellt) kann beispielsweise individuell entlang eines Fahrwegs auf dem Boden gesteuert werden.

Ferner werden weitere Fahrzeugelemente 102 dargestellt, welche frei von einer radarreflektierenden Schicht sind. Das weitere Fahrzeugelement 102 kann sich beispielsweise an das Fahrzeugelement 101 mit der radarreflektierenden Schicht anschließen, sodass das Fahrzeugelement 101 und das weitere Fahrzeugelement 102 gemeinsam den Hohlkörper 103 ausbilden. Alternativ können das Fahrzeugelement 101 und das weitere Fahrzeugelement 102 getrennte Hohlkörper ausbilden.

Das weitere Fahrzeugelement 102 bildet beispielsweise einen Teil des zu simulieren Fahrzeugs ab, welcher ebenfalls keine oder kaum radarreflektierende Eigenschaften aufweist. Beispielsweise kann das weitere Fahrzeugelement 102 wie in Fig. 1 dargestellt Öffnungen in der Felge des Motorrads darstellen.

Ferner kann das Fahrzeugelement 101 einen Hohlraum 103 aufweisen, welche spezifische Formen eines zu simulierenden metallischen Bauteils eines zu stimulierenden Fahrzeugs nachbildet. In Fig. 1 wird beispielsweise mittels eines Hohlraums 103 in dem Grundrahmen eines Fahrzeugelements 101 des gezeigten Motorrads ein Motorblock 107 simuliert. Der Hohlraum 103 weist dabei die spezifische Form des Motorblocks 107 auf. Innenliegend umgibt die Innenschicht 105, welche radarreflektierende Eigenschaften aufweist, dem Hohlraum 103 bildet somit die Form des Motorblocks 107 nach. Die Innenschicht 105 kann beispielsweise Strahlung als Sensorsignale, beispielsweise Temperaturstrahlung, abgeben. So kann beispielsweise in dem Fahrzeugelement 101 ein Generator, z.B. eine Wärmequelle, für Sensorsignale angeordnet werden, wobei die Innenschicht 105 diese Wärmestrahlung nach außen abgibt. So kann beispielsweise ein Motorblock 107 eines Fahrzeugs simuliert werden.

Somit kann mit der Ausbildung der Hüllstruktur beispielsweise ein massiver Körper, welche die Außenschicht darstellt, gebildet werden, in welchen eine Kavität, die der Form eines zu simulierenden Objekts spricht, ausgebildet werden. Die Innenschicht wird um die Kavität an der Außenschicht angeordnet so kann beispielsweise neben der Außengeometrie eines Fahrzeugelement ebenfalls radarreflektierende Innenkomponenten, wie beispielsweise ein Motorblock, des Fahrzeugs nachgebildet werden.

**Fig. 2** zeigt ein Dummy-Fahrzeug 100 in Form eines Automobils. Das dargestellte Dummy-Fahrzeug 100 weist mehrere verschiedene Fahrzeugelemente 101 auf. Jedes Fahrzeugelement 101 bildet einen Teil des zu simulierenden Autos ab. Ein Fahrzeugelement 101 kann beispielsweise eine Motorhaube, Karosserie oder eine Tür des zu simulierenden Automobils abbilden. Die Fahrzeugelemente 101, welche die radarreflektierende Innenschicht 105 aufweisen, bilden insbesondere Teile des zu simulierenden Automobils ab, welche beispielsweise metallische Strukturen aufweisen bzw. Radarwellen reflektieren.

Ferner werden Bereiche des Fahrzeug-Dummys 100 gezeigt, die weitere Fahrzeugelemente der 102 darstellen. Die weitere Fahrzeugelemente 102 bilden beispielsweise Fensterbereiche oder Scheinwerfer des zu simulierenden Automobils ab. Die Fahrzeugelemente 102 weisen dabei keine radarreflektierende bzw. eine kaum radarreflektierende Innenschichten 105 auf.

Die Fahrzeugelemente 101 und die weiteren Fahrzeugelemente 102 können integral ausgebildet werden. So kann beispielsweise das Fahrzeugelement 101 und das weitere Fahrzeugelement 102 gemeinsam aus einem Schaumstoffmaterial hergestellt werden, wobei im Bereich des weiteren Fahrzeugelements 102 keine radarreflektierende Innenschicht 105 vorgesehen ist.

### Bezuaszeichenliste:

100 Dummy-Fahrzeug
101 Fahrzeugelement
102 weiteres Fahrzeugelement
103 Hohlkörper
104 Außenschicht
105 Innenschicht
106 Koppelelement
107 Motorblock

## Patentansprüche

1. Dummy-Fahrzeug (100) zum Durchführen von Tests für Fahrerassistenzsysteme, das Dummy-Fahrzeug (100) aufweisend:
ein Fahrzeugelement (101), welches einen Teil eines zu simulierendes Fahrzeugs abbildet,
wobei das Fahrzeugelement (101) eine Hüllstruktur (103) ausbildet,
wobei die Hüllstruktur eine Außenschicht (104) und eine Innenschicht (105) aufweist,
wobei die Außenschicht (104) in der Hüllstruktur (103) weiter außen angeordnet ist als die Innenschicht (105),
**dadurch gekennzeichnet dass**
die Außenschicht (104) transparent für Sensorsignale von Sensoren des Fahrerassistenzsystems ist,
wobei die Innenschicht (105) sensorsensitiv für Sensorsignale von Sensoren des Fahrerassistenzsystems ist,
wobei die Dicke der Außenschicht (104) und die Dicke der Innenschicht (105) derart ausgebildet sind, dass der Flächeninhalt der Innenoberfläche der Innenschicht (105) zumindest 70% der Außenoberfläche der Außenschicht (104) aufweist.

2. Dummy-Fahrzeug (100) gemäß Anspruch 1,
wobei die Hüllstruktur (103) einen Hohlkörper mit einem Innenvolumen ausbildet.

3. Dummy-Fahrzeug (100) gemäß Anspruch 1,
wobei die Hüllstruktur ein Füllmaterial aufweist, um welches die Innenschicht (105) angelegt ist.

4. Dummy-Fahrzeug (100) gemäß einem der Ansprüche 1 bis 3,
wobei die Innenschicht (105) ein thermisch reflektierendes Material aufweist.

5. Dummy-Fahrzeug (100) gemäß einem der Ansprüche 1 bis 4,
wobei die Innenschicht (105) beheizbar ist.

6. Dummy-Fahrzeug (100) gemäß einem der Ansprüche 1 bis 5,
wobei die Innenschicht (105) ein radarreflektierendes Material aufweist.

7. Dummy-Fahrzeug (100) gemäß einem der Ansprüche 1 bis 6,
wobei die Außenschicht (104) radartransparent ist.

8. Dummy-Fahrzeug (100) gemäß einem der Ansprüche 1 bis 7,
wobei die Außenschicht (104) aus einem Schaumstoffmaterial besteht,
wobei die Außenschicht (104) insbesondere elektrisch nicht leitend ist.

9. Dummy-Fahrzeug (100) gemäß einem der Ansprüche 1 bis 8,
wobei die Dicke der Außenschicht (104) und die Dicke der Innenschicht (105) derart ausgebildet sind, dass der Flächeninhalt der Innenoberfläche 80% bis 90% der Außenoberfläche aufweist, und
wobei die Dicke der Außenschicht (104) insbesondere 0,1 cm bzw. 0,5 cm bis 30cm, insbesondere 2 cm bis 15 cm, insbesondere 5 cm bis 10 cm, beträgt.

10. Dummy-Fahrzeug (100) gemäß einem der Ansprüche 1 bis 9,
wobei die Innenschicht (105) als Folie ausgebildet ist
wobei die Innenschicht (105) insbesondere elektrisch leitfähig ist.

11. Dummy-Fahrzeug (100) gemäß einem der Ansprüche 1 bis 6,
wobei die Innenschicht (105) eine metallische Schicht ausbildet.

12. Dummy-Fahrzeug (100) gemäß einem der Ansprüche 1 bis 11,
wobei die Außenschicht (104) aus Polyvinylchlorid, Polyolefinwerkstoffen (Polyethylen, Polypropylen) oder Polyurethan ausgebildet ist.

13. Dummy-Fahrzeug (100) gemäß einem der Ansprüche 1 bis 12,
wobei auf der Außenschicht (104) eine optische Schicht, insbesondere eine optische Folie, aufgebracht ist,
wobei die optische Schicht insbesondere aus Polyvinylchlorid oder Polyurethan besteht.

14. Dummy-Fahrzeug (100) gemäß einem der Ansprüche 1 bis 13, ferner aufweisend
ein Kopplungselement (106) zur Koppelung an einer am Boden verfahrbaren Plattform.

15. Dummy-Fahrzeug (100) gemäß einem der Ansprüche 1 bis 14, ferner aufweisend
ein weiteres Fahrzeugelement (102), welches frei von einer radarreflektierenden Schicht ist,
wobei das weitere Fahrzeugelement (102) insbesondere einen Fensterbereich eines weiteren Teils des zu simulierenden Fahrzeugs abbildet,
wobei das Fahrzeugelement (101) und das weitere Fahrzeugelement (102) insbesondere integral ausgebildet sind, und,
wobei das weitere Fahrzeugelement (102) insbesondere eine weitere Hüllstruktur aufweist, welche zusammen mit der Hüllstruktur des Fahrzeugelements (101) den Hohlkörper (103) ausbildet.

## Claims

1. Dummy vehicle (100) for performing tests for driver assistance systems, the dummy vehicle (100) comprising:
a vehicle element (101) which represents a part of a vehicle to be simulated,
wherein the vehicle element (101) forms an envelope structure (103),
wherein the envelope structure comprises an outer layer (104) and an inner layer (105),
wherein the outer layer (104) in the envelope structure (103) is arranged further outside than the inner layer (105),
**characterized in that**
the outer layer (104) is transparent for sensor signals of sensors of the driver assistance system,
wherein the inner layer (105) is sensor sensitive for sensor signals of sensors of the driver assistance system,
wherein the thickness of the outer layer (104) and the thickness of the inner layer (105) are configured such that the surface area of the inner surface of the inner layer (105) comprises at least 70 % of the outer surface of the outer layer (104).

2. Dummy vehicle (100) according to claim 1,
wherein the envelope structure (103) forms a hollow body with an inner volume.

3. Dummy vehicle (100) according to claim 1,
wherein the envelope structure comprises a filling material around which the inner layer (105) is applied.

4. Dummy vehicle (100) according to one of the claims 1 to 3,
wherein the inner layer (105) comprises a thermally reflecting material.

5. Dummy vehicle (100) according to one of the claims 1 to 4,
wherein the inner layer (105) is heatable.

6. Dummy vehicle (100) according to one of the claims 1 to 5,
wherein the inner layer (105) comprises a radar reflecting material.

7. Dummy vehicle (100) according to one of the claims 1 to 6,
wherein the outer layer (104) is radar transparent.

8. Dummy vehicle (100) according to one of the claims 1 to 7,
wherein the outer layer (104) consists of a foam material,
wherein the outer layer (104) in particular is not electrically conductive.

9. Dummy vehicle (100) according to one of the claims 1 to 8,
wherein the thickness of the outer layer (104) and the thickness of the inner layer (105) are configured such that the surface area of the inner surface comprises 80 % to 90 % of the outer surface, and
wherein the thickness of the outer layer (104) in particular is 0.1 cm or 0.5 cm to 30 cm, in particular 2 cm to 15 cm, in particular 5 cm to 10 cm.

10. Dummy vehicle (100) according to one of the claims 1 to 9,
wherein the inner layer (105) is configured as a foil,
wherein the inner layer (105) in particular is electrically conductive.

11. Dummy vehicle (100) according to one of the claims 1 to 6,
wherein the inner layer (105) forms a metallic layer.

12. Dummy vehicle (100) according to one of the claims 1 to 11,
wherein the outer layer (104) is made of polyvinyl chloride, polyolefin materials (polyethylene, polypropylene) or polyurethane.

13. Dummy vehicle (100) according to one of the claims 1 to 12,
wherein on the outer layer (104) an optical layer, in particular an optical foil, is attached,
wherein the optical layer in particular consists of polyvinyl chloride or polyurethane.

14. Dummy vehicle (100) according to one of the claims 1 to 13, further comprising
a coupling element (106) for coupling to a platform which is displaceable on the ground.

15. Dummy vehicle (100) according to one of the claims 1 to 14, further comprising
a further vehicle element (102) which is free of a radar reflecting layer,
wherein the further vehicle element (102) in particular represents a window region of a further part of the vehicle to be simulated,
wherein the vehicle element (101) and the further vehicle element (102) in particular are integrally formed, and
wherein the further vehicle element (102) in particular comprises a further envelope structure which, together with the envelope structure of the vehicle element (101), forms the hollow body (103).

## Revendications

1. Véhicule factice (100) permettant d'effectuer des tests de systèmes d'aide à la conduite, le véhicule factice (100) comprenant :
un élément de véhicule (101) représentant une partie d'un véhicule à simuler,
dans lequel l'élément de véhicule (101) forme une structure de carénage (103),
dans lequel la structure de carénage présente une couche extérieure (104) et une couche intérieure (105),
dans lequel la couche extérieure (104) est agencée au sein de la structure de carénage (103) plus à l'extérieur que ne l'est la couche intérieure (105),
**caractérisé en ce que**
la couche extérieure (104) est transparente à des signaux de capteur en provenance de capteurs du système d'aide à la conduite,
dans lequel la couche intérieure (105) présente une sensibilité de détection à des signaux de capteur en provenance des capteurs du système d'aide à la conduite,
dans lequel l'épaisseur de la couche extérieure (104) et l'épaisseur de la couche intérieure (105) sont conçues de telle manière que la superficie de la surface intérieure de la couche intérieure (105) représente au moins 70 % de la surface extérieure de la couche extérieure (104).

2. Véhicule factice (100) selon la revendication 1, dans lequel la structure de carénage (103) forme un corps creux avec un volume intérieur.

3. Véhicule factice (100) selon la revendication 1,
dans lequel la structure de carénage présente un matériau de remplissage autour duquel est installée la couche intérieure (105).

4. Véhicule factice (100) selon l'une quelconque des revendications 1 à 3,
dans lequel la couche intérieure (105) présente un matériau thermiquement réfléchissant.

5. Véhicule factice (100) selon l'une quelconque des revendications 1 à 4,
dans lequel la couche intérieure (105) peut être chauffée.

6. Véhicule factice (100) selon l'une quelconque des revendications 1 à 5,
dans lequel la couche intérieure (105) présente un matériau réfléchissant les ondes radar.

7. Véhicule factice (100) selon l'une quelconque des revendications 1 à 6,
dans lequel la couche extérieure (104) est transparente aux ondes radar.

8. Véhicule factice (100) selon l'une quelconque des revendications 1 à 7,
dans lequel la couche extérieure (104) est constituée d'un matériau en mousse,
dans lequel la couche extérieure (104) est en particulier non conductrice électriquement.

9. Véhicule factice (100) selon l'une quelconque des revendications 1 à 8,
dans lequel l'épaisseur de la couche extérieure (104) et l'épaisseur de la couche intérieure (105) sont conçues de telle manière que la superficie de la surface intérieure représente entre 80 % et 90 % de la surface extérieure, et
dans lequel l'épaisseur de la couche extérieure (104) est en particulier comprise entre 0,1 cm ou 0,5 cm et 30 cm, en particulier comprise entre 2 cm et 15 cm, en particulier comprise entre 5 cm et 10 cm.

10. Véhicule factice (100) selon l'une quelconque des revendications 1 à 9,
dans lequel la couche intérieure (105) est réalisée sous forme de film,
dans lequel la couche intérieure (105) est en particulier électriquement conductrice.

11. Véhicule factice (100) selon l'une quelconque des revendications 1 à 6,
dans lequel la couche intérieure (105) forme une couche métallique.

12. Véhicule factice (100) selon l'une quelconque des revendications 1 à 11,
dans lequel la couche extérieure (104) est réalisée à partir de chlorure de polyvinyle, de matériaux polyoléfiniques (polyéthylène, polypropylène) ou de polyuréthane.

13. Véhicule factice (100) selon l'une quelconque des revendications 1 à 12,
dans lequel une couche optique, en particulier un film optique, est appliquée sur la couche extérieure (104),
dans lequel la couche optique est constituée en particulier de chlorure de polyvinyle ou de polyuréthane.

14. Véhicule factice (100) selon l'une quelconque des revendications 1 à 13, présentant en outre
un élément de couplage (106) permettant un couplage à une plate-forme pouvant être déplacée au niveau du sol.

15. Véhicule factice (100) selon l'une quelconque des revendications 1 à 14, présentant en outre
un élément de véhicule (102) supplémentaire exempt d'une couche réfléchissant les ondes radar,
dans lequel l'élément de véhicule (102) supplémentaire représente en particulier une région de fenêtre d'une partie supplémentaire du véhicule à simuler,
dans lequel l'élément de véhicule (101) et l'élément de véhicule (102) supplémentaire sont en particulier réalisés en un seul tenant, et,
dans lequel l'élément de véhicule (102) supplémentaire présente en particulier une structure de carénage supplémentaire qui, avec la structure de carénage de l'élément de véhicule (101), forme le corps creux (103).
